(19) Europäisches Patentamt / European Patent Office / Office européen des brevets

(11) **EP 2 671 850 A1**

(12) **EUROPEAN PATENT APPLICATION**
published in accordance with Art. 153(4) EPC

(43) Date of publication:
**11.12.2013 Bulletin 2013/50**

(51) Int Cl.:
*C03C 17/32* (2006.01)    *B32B 27/00* (2006.01)
*C09J 7/02* (2006.01)    *C09J 133/04* (2006.01)

(21) Application number: **12742338.2**

(22) Date of filing: **26.01.2012**

(86) International application number:
**PCT/JP2012/051694**

(87) International publication number:
**WO 2012/105413 (09.08.2012 Gazette 2012/32)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **02.02.2011 JP 2011020968**

(71) Applicant: **Nitto Denko Corporation**
**Ibaraki-shi, Osaka 567-8680 (JP)**

(72) Inventors:
- **IKENAGA, Hiroko**
  **Ibaraki-shi**
  **Osaka 567-8680 (JP)**
- **IGARASHI, Takeshi**
  **Ibaraki-shi**
  **Osaka 567-8680 (JP)**
- **SUZUKI, Toshitaka**
  **Ibaraki-shi**
  **Osaka 567-8680 (JP)**
- **KIDO, Akifumi**
  **Ibaraki-shi**
  **Osaka 567-8680 (JP)**
- **SAITOU, Yuki**
  **Ibaraki-shi**
  **Osaka 567-8680 (JP)**

(74) Representative: **Müller-Boré & Partner**
**Patentanwälte**
**Grafinger Straße 2**
**81671 München (DE)**

(54) **PROTECTIVE SHEET FOR GLASSES**

(57) Provided is a protective sheet for glasses, which has excellent workability, adhesion reliability, visibility and impact resistance. A protective sheet for glasses, characterized by having a scratched area ratio of 0.15% or less as measured in an impact resistance test, a tensile elastic modulus of 50 MPa to 3500 MPa as measured in accordance with JIS K7124, a bending strength of $2.0 \times 10^7$ to $5.5 \times 10^{10}$ $\mu m^3 \cdot MPa$, a distinctness of image of 70% or more, and a thickness of 45 to 250 $\mu m$.

**Description**

TECHNICAL FIELD

The present invention relates to a protecting sheet to be used for surface protection for an adherend having a glass surface.

BACKGROUND ART

In recent years, in order to prevent damages such as scratches during storage and distribution process, surface protecting sheets have been used in various fields of mainly electric and electronic materials and precision machines, as well as wood products, metal products, glass products, plastic products, etc. In order to prevent scratches on automotive bodies (metal parts, plastic parts, etc.) also during storage and distribution process of automobiles to be exported, for example, surface protecting films each obtained by forming a pressure-sensitive adhesive layer on a polyolefin-based resin film have been used.

Since it is necessary to occasionally move respective automobiles in a state where a protecting film is bonded to the automobiles during storage and distribution process, a surface protecting film is required to have sufficient visibility for driving without any problem if the surface protecting film is used for surface protection for automotive glasses.

Particularly, regarding automobiles for export, etc., completed vehicles are often kept in storage outdoors for a certain period until they are handed over to demanders and it has been found that during such storage period and transportation, a problem of breakages such as scratches and cracks on glass surfaces owing to falling rocks and chipping may possibly be caused. Generally, in the case of damage in a coating part of an automobile, it is possible to carry out partial repair by re-finishing or the like; however, in the case of a scratch or a crack caused in a glass part of an automobile, even if it is only in a small portion, the entire glass part needs to be replaced and it becomes a serious issue in terms of workability and cost. Therefore, in recent years, a protective material for protecting a glass surface of an automobile or the like during shipping and storage has been desired.

As a trial for overcoming the above-mentioned problems, materials for protecting a glass surface are proposed. For example, a surface protecting film using a support made of polypropylene and a pressure-sensitive adhesive containing a polyethylene-vinyl acetate copolymer is disclosed (e.g., see Patent Document 1). However, the proposed materials are insufficient in weather resistance and impact resistance and it has been found that these materials are insufficient for use for protecting, particularly, automotive glasses which are often kept in storage outdoors.

As a protecting sheet for automotive glasses, those which are made of polyvinyl chloride (PVC) are also often used, but PVC sheets are insufficient in protection function and tackiness. Particularly, in order to improve the protection function, it has been tried to make PVC sheets thick. However, owing to the thickness, for example, in the case where a PVC sheet is bonded to a front glass of an automobile, there occurs a problem of visibility, e.g., occurrence of distortion or blur.

On the other hand, glass protection devices for partially covering window glasses of an automobile with cover sheets are disclosed as means different from a surface protecting sheet (e.g., see Patent Document 2). However, these proposals are inferior in terms of cost and workability and also inferior in visibility, and they are therefore insufficient for use for protecting automotive glasses since it is necessary to occasionally move respective automobiles during storage and distribution process.

Patent Document 3 discloses a glass protecting film having a layer containing polyester; however, since polyester is inferior in weather resistance, the glass protecting film has a problem of unsuitability for storage outdoors.

PRIOR ART DOCUMENTS

PATENT DOCUMENTS

Patent Document 1: JP-A 2001-150608
Patent Document 2: JP-A 2004-106820
Patent Document 3: JP-A 2003-205588

## SUMMARY OF THE INVENTION

### PROBLEMS TO BE SOLVED BY THE INVENTION

In the light of above circumstances, an aim of the present invention is to provide a protecting sheet for glasses excellent in workability, adhesion reliance, visibility, and impact resistance.

### MEANS FOR SOLVING THE PROBLEMS

Inventors of the present invention have made various  investigations for solving the above problems and, as a result, found that the aim can be attained with a protecting sheet for glasses as described below, and completed the present invention.

That is, a protecting sheet for glasses according to the present invention has a scratched area ratio of 0.15% or lower in an impact resistance test, a tensile modulus of 50 MPa to 3500 MPa in accordance with JIS K7124, a bending strength of $2.0 \times 10^7$ to $5.5 \times 10^{10}$ $\mu m^3 \cdot MPa$, an image clarity of 70% or higher, and a thickness of 45 to 250 $\mu m$.

The protecting sheet for glasses of the present invention preferably has a peeling rate of 500 mm/minute or lower in a constant load peeling-off test.

The protecting sheet for glasses of the present invention preferably has a pressure-sensitive adhesive layer on at least one surface.

### EFFECT OF THE INVENTION

The protecting sheet for glasses of the present invention is adjusted so as to have a desired thickness and tensile modulus and further, the scratched area and the bending strength are  adjusted and thus, a protecting sheet for glasses excellent in workability, adhesion reliance, visibility, and impact resistance can be obtained and it is advantageously useful.

### MODE FOR CARRYING OUT THE INVENTION

Hereinafter, embodiments of the present invention will be described in detail.

As a protecting sheet for glasses according to the present invention, those which have a function as a support as they are can be used without any particular limitation, and the support is preferably made of, for example, polyolefin and/or polyester; more preferably made of at least one layer selected from the group consisting of a polypropylene layer, a polyethylene layer, and a polyethylene terephthalate layer; and particularly preferably a support having a three-layer structure of polypropylene layer/polyethylene layer/polypropylene layer. A layer (protecting sheet for glasses) made of polyolefin or polyester is excellent in visibility and workability at the time of bonding and therefore, it is preferable.

In the present invention, a sheet means a plane-like material and usually includes those so-called rolls and the like  in addition to tapes and films.

A support having a resin layer with a multilayer structure containing at least the above three-layer structure of polypropylene layer/polyethylene layer/polypropylene layer may have other layers between the respective layers and its surface.

Polypropylene to be used in the above-mentioned polypropylene layer is a material excellent in transparency and heat resistance and having impact resistance in a certain level, but may possibly cause a phenomenon of curling or the like. Therefore, it has been found that a protecting sheet for glasses provided with good balance of impact resistance, weather resistance and tackiness is obtained by using a polyethylene layer and a polypropylene layer in combination in the above-mentioned three-layer structure. Further, formation of a polypropylene layer in the outermost layer of a protecting sheet for glasses can make the protecting sheet for glasses more excellent in transparency.

Examples of the above polyethylene layer (polyethylene-based resin layer) include resin layers made of ethylene-based polymers (low density, high density, linear low density, etc.); olefin-based polymers such as an  ethylene-$\alpha$-olefin copolymer; olefin-based polymers composed of ethylene and other monomers such as an ethylene-vinyl acetate copolymer, an ethylene-methyl methacrylate copolymer, an ethylene-propylene copolymer, and an ethylene-propylene-$\alpha$-olefin copolymer; and the like. These polymers to be used for the polyethylene layer may be used alone or in combination of two or more thereof. Use of these polyethylene layers preferably provides weather resistance, impact resistance, and also adhesion to the outermost layer and to other layers.

The thickness of each polyethylene layer is generally 20 to 150 $\mu m$ and particularly 30 to 100 $\mu m$, but it is not limited to the range.

Examples of the polypropylene layer (polypropylene-based resin layer) include resin layers made of propylene-based polymers (homopolymer and random copolymer obtained by randomly inserting ethylene or another comonomer other than propylene in molecular chains (hereinafter, referred to as random polypropylene)); olefin-based polymers composed of propylene and other monomers such as an ethylene-propylene copolymer, a propylene-$\alpha$-olefin copolymer, and an ethylene-propylene-$\alpha$-olefin copolymer; and the like. These polymers to be used for the polypropylene layer may be used alone or in combination of two or more thereof. Use of these polypropylene layers preferably provides weather resistance, impact resistance, and also adhesion to other layers.

The thickness of each polypropylene layer is generally 5 to 40 $\mu$m and particularly 5 to 30 $\mu$m, but it is not limited to the range.

In order to improve the interlayer adhesion between the polyethylene layer and the polypropylene layer, a technique of adding a modifier to the polypropylene layer or using a polypropylene layer containing a polyethylene unit (polypropylene-based resin layer) may be used.

Examples of resins to be used for the polypropylene layer in order to improve the tackiness as described above may include amorphous soft polypropylene-based materials, block copolymers of polypropylene (block polypropylene), and the like. Specific examples thereof include Tafthren (manufactured by Sumitomo Chemical Co., Ltd.) and the like.

The content of the polyethylene unit in the polypropylene layer is preferably 0 to 20 wt% and in terms of transparency, it is more preferable as it is lower. If the content of the polyethylene unit is 20 wt% or higher, the polypropylene unit and the polyethylene unit easily cause phase separation and consequently, transparency may not be obtained.

The thickness of the resin layer having three-layer structure or the protecting sheet for glasses to be used as a support is 45 to 250 $\mu$m, preferably 48 to 200 $\mu$m, more preferably 50 to 150 $\mu$m, and particularly preferably 60 to 120 $\mu$m. If the thickness exceeds 250 $\mu$m, the resilience becomes high and if it is lower than 45 $\mu$m, the scratched area (ratio) becomes high and therefore, it is not preferable.

In order to improve the adhesion to other resin layers, a pressure-sensitive adhesive layer, an undercoating agent, etc., the surface of the support (or the respective resin layers) may be subjected to surface treatment such as corona treatment, plasma treatment, or ultraviolet treatment. The support (resin layers) may also be subjected to rear surface treatment if necessary.

In terms of weather resistance, the support (or the respective resin layers) may be subjected to treatment using a weather-resistant stabilizer to the extent that the visibility or the like is not deteriorated in the present invention.

The treatment using a weather-resistant stabilizer (ultraviolet absorbent, photostabilizer, and antioxidant) may be carried out by application treatment or transfer treatment to the resin layer surface, kneading treatment in the resin layer, or the like.

Known ultraviolet absorbents such as a benzotriazole-based ultraviolet absorbent, a triazine-based ultraviolet absorbent, and a benzophenone-based ultraviolet absorbent may be properly used as the ultraviolet absorbent. These ultraviolet absorbents may be used alone or in combination of two or more thereof.

The addition amount of the ultraviolet absorbent is preferably 5 parts by weight or lower, more preferably 3 parts by weight or lower, and furthermore preferably about 0.1 to 1 part by weight per 100 parts by weight of the base polymer of the respective resin layers.

Known photostabilizers such as a hindered amine-based photostabilizer and a benzoate-based photostabilizer may be properly used as the photostabilizer. These photostabilizers may be used alone or in combination of two or more thereof.

The addition amount of the photostabilizer is preferably 5 parts by weight or lower, more preferably 3 parts by weight or lower, and furthermore preferably about 0.1 to 1 part by weight per 100 parts by weight of the base polymer of the respective resin layers.

Known antioxidants such as a hindered phenolic antioxidant, a phosphorus-based processing thermal stabilizer, a lactone-based processing thermal stabilizer, and a sulfur-based heat resistant stabilizer may be properly used as the antioxidant. These antioxidants may be used alone or in combination of two or more thereof.

The addition amount of the antioxidant is preferably 3 parts by weight or lower, more preferably 1 part by weight or lower, and furthermore preferably about 0.01 to 0.5 parts by weight per 100 parts by weight of the base polymer of the respective resin layers.

The above-mentioned support (or the respective resin layers) may also be blended with arbitrary additives such as flame retardants, inert inorganic particles, organic particles, lubricants, and antistatic agents, to the extent that the effects of the present invention are not deteriorated.

In the present invention, as being used as a protecting sheet for glasses, the support is preferably a resin film having heat resistance and solvent resistance as well as flexibility. If the support (a support film) has flexibility, a pressure-sensitive adhesive solution (pressure-sensitive adhesive composition) can be applied by a roll coater or the like and it can be wound in a roll form.

If necessary, the support (resin layer) may also be subjected to release and antifouling treatment with a silicone-based, a fluorine-based, a long chain alkyl-based or a fatty acid amide-based releasing agent, silica powder, and the like; acid treatment; alkali treatment; primer treatment; and coating type, kneading type, and vapor deposition type antistatic treatment.

In the protecting sheet for glasses of the present invention, the scratched area ratio in an impact resistance test is 0.15% or lower, preferably 0.13% or lower, more preferably 0.11% or lower, and even more preferably 0.10 % or lower. The protecting sheet for glasses having such scratched area ratio is suitable for protecting glasses undergoing storage for a long time outdoors and distribution process, particularly in terms of strength against impact.

The impact resistance test (evaluation of impact resistance) in the present invention is carried out using a sample obtained by bonding a produced protecting sheet for glasses to a glass in a specimen size by a chipping tester (JA-400, manufactured by Suga Test Instruments Co., Ltd.) under the following test conditions and the scratched area ratio (%) per constant area of each adherend is calculated according to the following equation after the test:

```
Scratched area ratio (%) = [(total area of scratched

part)/(total area)] × 100.
```

A method for adjusting the scratched area ratio is not particularly limited, and the scratched area ratio can be adjusted by adjusting the tensile modulus and thickness of the protecting sheet for glasses of the present invention (support) to desired ranges. Specifically, it is preferable to use polyesters with high tensile modulus such as polyethylene terephthalate and polycarbonate. In the case where polyolefin such as polyethylene or polypropylene is used, the scratched area ratio can be adjusted by using a homopolymer in highly crystalline state or using a catalyst such as metallocene. The tensile modulus is adjusted to a desired range (high tensile modulus) and further, the thickness is adjusted. In general, polyolefin with high crystallinity tends to have high tensile modulus.

In the protecting sheet for glasses of the present invention, the tensile modulus in accordance with JIS K7124 is 50 MPa to 3500 MPa, preferably 100 MPa to 3450 MPa, and more preferably 200 MPa to 3400 MPa. The protecting sheet for glasses having such tensile modulus is suitable for protecting glasses undergoing storage for a long time outdoors and distribution process, and particularly the protecting sheet for glasses having high tensile modulus in the above-mentioned range has sufficient hardness and protection function and thus is suitable since the sheet itself can be made thin and the visibility is improved. The tensile modulus in the present invention is of only the protecting sheet for glasses functioning as a support even in the case where a pressure-sensitive adhesive layer is formed.

In the protecting sheet for glasses of the present invention, the bending strength is $2.0 \times 10^7$ to $5.5 \times 10^{10}$ $\mu m^3 \cdot MPa$, preferably $5.0 \times 10^7$ to $4.0 \times 10^{10}$ $\mu m^3 \cdot MPa$, and more preferably $6.0 \times 10^7$ to $3.0 \times 10^{10}$ $\mu m^3 \cdot MPa$. The protecting sheet for glasses having such bending strength is suitable for protecting glasses undergoing storage for a long time outdoors and distribution process, and particularly the protecting sheet for glasses having bending strength in the above-mentioned range has an excellent property for following an adherend (glass) and thus is suitable since this characteristic improves workability and adhesion reliance. The bending strength in the present invention is calculated according to the following equation:

$$Bending\ strength\ (\mu m^3 \bullet MPa)\ =\ (length\ of\ sample)^3 \times$$

$$(tensile\ modulus).$$

In the protecting sheet for glasses of the present invention, the image clarity is preferably 70% or higher, more preferably 75% or higher, and particularly preferably 80% or higher. The protecting sheet for glasses having such image clarity is suitable for protecting glasses undergoing storage for a long time outdoors and distribution process, and is particularly suitable since visibility is improved. The reason for evaluation of the image clarity is for measuring the clarity as a determination standard for confirming good visibility in the front without occurrence of distortion or blur in the case where, for example, the protecting sheet for glasses is bonded to a front glass of an automobile and the automobile is driven.

A method for adjusting the image clarity is not particularly limited, and those which can be used as the protecting sheet for glasses (support) of the present invention and have a relatively low inner haze value are preferable to be used. Specifically, the image clarity can be adjusted by using polyester such as polyethylene terephthalate or polycarbonate with a small inner haze value, adjusting the surface roughness of the polyester, and further adjusting the fluidity of the polyester to, for example, 20 g/10 minutes (measured in accordance with JIS K7210) at melt flow rate (MFR: test temperature of 230°C and load of 2.16 kg). In the case of using polyolefin such as polyethylene or polypropylene, use of metallocene or the like as a catalyst makes it possible to narrow molecular weight distribution (Mw/Mn ≤ 3.0) and to lessen components with low molecular weights (suppression of components with Mw ≤ 5000 to 1.0 wt% or lower), thereby obtaining desired image clarity.

In the protecting sheet for glasses of the present invention, the inner haze value is preferably 10.0% or lower, more preferably 5.0% or lower, furthermore preferably 3.0% or lower, still more preferably 2.0% or lower, and particularly preferably 1.5% or lower. In order to use the protecting sheet for protecting the surfaces of glasses of automobiles or the like, it is necessary to occasionally move respective automobiles in a state where the protecting sheet is bonded to the automobiles during storage and distribution process, and therefore, the protecting sheet for glasses having such haze value is particularly suitable for protecting automotive glasses or the like undergoing storage for a long time outdoors and distribution process.

The protecting sheet for glasses of the present invention has a surface roughness (Ra: arithmetical means roughness) of the surface not to be bonded to glass in accordance with JIS B0601 of preferably 0.35 $\mu$m or lower, more preferably 0.30 $\mu$m or lower, and particularly preferably 0.25 $\mu$m or lower. If the surface roughness (Ra) exceeds 0.35 $\mu$m, the image clarity is caused to be lowered and it is not preferable. A method for adjusting the surface roughness is not particularly limited, but it may be possible by, for example, decreasing the viscosity of a resin, a raw material for the sheet, at the time of film formation (sheet production), or decreasing the shear rate for the purpose of preventing roughening the interface between an extrusion die and the resin. More specifically, examples of a method for lowering the resin viscosity include a method for adjusting the resin temperature in the extrusion die within a range of 180 to 300°C and the like, and at that time, the viscosity is adjusted so that the MFR is 20 g/10 minutes or lower, and as a method for decreasing the shear rate, the line rate is adjusted to 150 m/minute or lower, the lip width of the extrusion die is adjusted to 0.5 to 40 mm, or the like at the time of film formation, and therefore, the surface roughness (Ra) can be adjusted.

It is supposed that the surface roughness has a correlation with undulation of the surface of the protecting sheet for glasses, and adjustment of those values within the above-mentioned ranges can adjust the undulation and ultimately, the image clarity itself can be improved.

In the protecting sheet for glasses of the present invention, the peeling rate (m/minute) is preferably 500 mm/minute or lower, more preferably 300 mm/minute or lower, and particularly preferably 200 mm/minute or lower in a constant load peeling-off test. The protecting sheet for glasses having such peeling rate is suitable for protecting glasses undergoing storage for a long time outdoors and distribution process, and is particularly suitable since adhesion reliance is improved.

A method for adjusting the peeling rate is not particularly limited, but in the case where the protecting sheet for glasses of the present invention does not have a pressure-sensitive adhesive layer, the peeling rate can be adjusted by adjusting the above-mentioned surface roughness or the like within a desired range, and in the case where the protecting sheet for glasses of the present invention has a pressure-sensitive adhesive layer, the peeling rate can be adjusted based on the blend amount of a crosslinking agent and the kind of a polymer to be used in the pressure-sensitive adhesive layer.

In the protecting sheet for glasses of the present invention, the peeling property by blowing (mm/20 seconds: peeling distance for 20 seconds (peeling distance) (mm)) is preferably 0.5 to 60 mm/20 seconds, more preferably 1 to 55 mm/20 seconds, and particularly preferably 1 to 50 mm/20 seconds. The protecting sheet for glasses having such peeling property by blowing is suitable for protecting glasses undergoing storage for a long time outdoors and distribution process, and particularly suitable since adhesion reliance is improved.

A method for adjusting the peeling property by blowing is not particularly limited, but in the case where the protecting sheet for glasses of the present invention does not have a pressure-sensitive adhesive layer, the peeling property by blowing can be adjusted by adjusting the above-mentioned surface roughness or the like within a desired range, and in the case where the protecting sheet for glasses of the present invention has a pressure-sensitive adhesive layer, the peeling property by blowing can be adjusted based on the blend amount of a crosslinking agent and the kind of a polymer to be used in the pressure-sensitive adhesive layer.

In the protecting sheet for glasses of the present invention, the adhering strength is preferably 0.1 to 10 N/25 mm and more preferably 0.2 to 5 N/25 mm at the time when the protecting sheet for glasses is bonded to glasses. If the adhering strength is lower than 0.1 N/25 mm, the adhesion reliance is inferior and on the other hand, if it exceeds 10 N/25 mm, it becomes difficult to peel off the protecting sheet for glasses from the glass surface to significantly lower the workability and therefore, it is not preferable.

A method for adjusting the adhering strength is not particularly limited, but in the case where the protecting sheet for glasses of the present invention does not have a pressure-sensitive adhesive layer, the adhering strength can be adjusted by adjusting the above-mentioned surface roughness or the like within a desired range, and in the case where the protecting sheet for glasses of the present invention has a pressure-sensitive adhesive layer, the adhering strength can be adjusted based on the blend amount of a crosslinking agent and the kind of a polymer to be used in the pressure-sensitive adhesive layer.

The protecting sheet for glasses of the present invention is preferable to have a pressure-sensitive adhesive layer on at least one surface, and those which have a function as a pressure-sensitive adhesive layer as they are can be used without any particular limitation. Examples of a pressure-sensitive adhesive forming the pressure-sensitive adhesive layer include various kinds of pressure sensitive adhesives such as acryl-based, natural rubber-based, synthetic rubber-based, ethylene-vinyl acetate copolymer-based, ethylene-acrylic acid ester-based, styrene-isoprene block copolymer-based, styrene-butadiene block copolymer-based, polyurethane-based, and polyester-based pressure-sensitive adhesives. Among these pressure-sensitive adhesives, because of high transparency and excellent visibility and easiness for exhibiting good adhesion properties to an adherend, an acryl-based pressure-sensitive adhesive is preferably used.

The acryl-based pressure-sensitive adhesive contains a (meth)acryl-based polymer and the (meth)acryl-based polymer preferably contains (meth) acrylate having an alkyl group with 2 to 14 carbon atoms as a monomer unit. In the present invention, the (meth) acryl-based polymer refers to an acryl-based polymer and/or a methacryl-based polymer. (Meth) acrylate also refers to as acrylate and/or methacrylate, and (meth)acryl refers to acryl and/or methacryl.

The (meth) acryl-based polymer may be obtained by properly using a (meth)acryl-based monomer having an alkyl group ((meth) acrylic acid alkyl ester) or the like as a monomer unit. These monomer compounds may be used alone or in combination of two or more thereof.

The (meth)acrylic acid alkyl ester is not particularly limited if it is, for example, (meth) (meth) acrylate having an alkyl group with 2 to 14 carbon atoms, but those with 3 to 13 carbon atoms are preferable and those with 4 to 12 carbon atoms are more preferable. Any of linear and branched alkyl groups can be used, but a branched alkyl group is preferable since the glass transition temperature thereof is low.

Other (meth)acryl-based monomers having an alkyl group ((meth)acrylic acid alkyl ester) and the like may be used properly, and examples thereof include a silane-based monomer having a silicon atom and the like.

More specific examples of the (meth)acrylic acid alkyl ester include ethyl (meth)acrylate, propyl (meth)acrylate, n-butyl (meth)acrylate, isobutyl (meth)acrylate, sec-butyl (meth)acrylate, t-butyl (meth)acrylate, hexyl (meth)acrylate, 2-ethylhexyl (meth)acrylate, cyclohexyl (meth)acrylate, t-butylcyclohexyl (meth)acrylate, isoamyl (meth)acrylate, n-pentyl (meth)acrylate, isopentyl (meth)acrylate, cyclopentyl (meth)acrylate, n-octyl (meth)acrylate, isooctyl (meth)acrylate, cyclooctyl (meth)acrylate, n-nonyl (meth)acrylate, isononyl (meth)acrylate, n-decyl (meth)acrylate, isodecyl (meth)acrylate, n-dodecyl (meth)acrylate, isomyristyl (meth)acrylate, n-tridecyl (meth)acrylate, n-tetradecyl (meth)acrylate, and the like. Among them, preferably used are ethyl (meth)acrylate, n-butyl (meth)acrylate, isobutyl (meth)acrylate, sec-butyl (meth) acrylate, t-butyl (meth)acrylate, 2-ethylhexyl (meth)acrylate, and the like.

The content of the above-mentioned (meth)acrylic acid alkyl ester in the entire monomers is preferably 40 to 99.9 wt%, more preferably 50 to 99 wt%, and particularly preferably 60 to 98 wt%. If it is lower than 40 wt%, the adhering strength to a glass surface may possibly be lowered.

A functional group-containing monomer is also used as a monomer unit for the above-mentioned (meth) acryl-based polymer. The functional group-containing monomer is used mainly for improving the adhesion to a substrate and making the initial tackiness to an adherend good.

The functional group-containing monomer in the present invention refers to a monomer having at least one functional group such as a carboxyl group, an acid anhydride group, and a hydroxyl group in the molecule, and examples thereof include a carboxyl group-containing monomer, an acid anhydride group-containing monomer, a hydroxyl group-containing monomer, and the like. Among them, a hydroxyl group-containing monomer is more preferably used in the present invention since the adhesion reliance is easily improved.

Examples of the carboxyl group-containing monomer include acrylic acid, methacrylic acid, carboxyethyl (meth) acrylate, carboxypentyl (meth)acrylate, itaconic acid, maleic acid, fumaric acid, crotonic acid, and the like. Among them, particularly preferably used are acrylic acid and methacrylic acid.

Examples of the acid anhydride group-containing monomer include maleic anhydride, itaconic anhydride, and the like.

Examples of the hydroxyl group-containing monomer include 2-hydroxyethyl (meth)acrylate, 2-hydroxypropyl (meth)acrylate, 4-hydroxybutyl (meth)acrylate, 2-hydroxyhexyl (meth)acrylate, 6-hydroxyhexyl (meth)acrylate, 8-hydroxyoctyl (meth)acrylate, 10-hydroxydecyl (meth)acrylate, 12-hydroxylauryl (meth)acrylate, (4-hydroxymethylcyclohexyl) methyl acrylate, N-methylol (meth)acrylamide, N-hydroxy(meth)acrylamide, vinyl alcohol, allyl alcohol, 2-hydroxyethyl vinyl ether, 4-hydroxybutyl vinyl ether, diethylene glycol monovinyl ether, and the like.

In the present invention, the functional group-containing monomers may be used alone or in combination of two or more thereof, and the content thereof in total is 0.1 to 15 wt%, preferably 3 to 10 wt%, and more preferably 5 to 10 wt% in the entire monomers of the (meth)acryl-based polymer. If the content is lower than 0.1 wt%, the adhesion to a substrate may possibly be lowered and on the other hand, if it exceeds 15 wt%, the adhering strength may possibly be increased with the lapse of time.

A vinyl-based monomer copolymerizable with the (meth)acrylic acid alkyl ester and/or the functional group-containing monomer may be used as the monomer unit to be used for the pressure-sensitive adhesive layer in the present invention. The copolymerizable vinyl-based monomer is used mainly for the purpose of adjusting the initial adhering strength and the adhering strength with the lapse of time, and also for adjusting the cohesive strength, if necessary.

Examples to be used properly as the copolymerizable vinyl-based monomer include components for improving cohesive strength and heat resistance such as a sulfonic acid group-containing monomer, a phosphoric acid group-containing monomer, a cyano group-containing monomer, a vinyl ester monomer, and an aromatic vinyl monomer; and functional group-containing components having functions for improving adhering strength and serving as crosslinking base points such as an amide group-containing monomer, an amino group-containing monomer, an imide group-containing monomer, an epoxy group-containing monomer, and a vinyl ether monomer. These copolymerizable vinyl-based monomers may be used alone or in combination of two or more thereof.

Examples of the sulfonic acid group-containing monomer include styrenesulfonic acid, allylsulfonic acid, 2-(meth)acrylamido-2-methylpropanesulfonic acid, (meth)acrylamidopropanesulfonic acid, sulfopropyl (meth)acrylate, (meth)acryloyloxynaphthalenesulfonic acid, and the like.

Examples of the phosphoric acid group-containing monomer include 2-hydroxyethylacryloyl phosphate.

Examples of the cyano group-containing monomer include acrylonitrile and methacrylonitrile.

Examples of the vinyl ester monomer include vinyl acetate, vinyl propionate, vinyl laurate, vinylpyrrolidone, and the like.

Examples of the aromatic vinyl compound include styrene, chlorostyrene, chloromethylstyrene, $\alpha$-methylstyrene, and benzyl(meth)acrylate, and the like.

Examples of the amide group-containing monomer include acrylamide, methacrylamide, diethyl(meth)acrylamide, N-vinylpyrrolidone, N-vinyl-2-pyrrolidone, N-(meth)acryloylpyrrolidone, N,N-dimethylacrylamide, N,N-dimethylmethacrylamide, N,N-diethylacrylamide, N,N-diethylmethacrylamide, N,N'-methylenebisacrylamide, N,N-dimethylaminopropylacrylamide, N,N-dimethylaminopropylmethacrylamide, and the like.

Examples of the amino group-containing monomer include N,N-dimethylaminoethyl (meth)acrylate, N,N-dimethylaminopropyl (meth)acrylate, N-(meth)acryloylmorpholine, (meth)acrylic acid aminoalkyl ester, and the like.

Examples of the imido group-containing monomer include cyclohexylmaleimide, isopropylmaleimide, N-cyclohexylmaleimide, and itaconeimide.

Examples of the epoxy group-containing monomer include glycidyl (meth)acrylate, and allyl glycidyl ether.

Examples of vinyl ethers include methyl vinyl ether, ethyl vinyl ether, and isobutyl vinyl ether.

In the present invention, the above-mentioned copolymerizable vinyl-based monomers may be used alone or in combination of two or more thereof, and the content thereof in total is preferably 0 to 45 wt% in the entire monomers of the (meth)acryl-based polymer. If it exceeds 45 wt%, the initial adhering strength may possibly be lowered and therefore, it is not preferable.

The (meth)acryl-based polymer to be used in the present invention has a weight average molecular weight of preferably 100,000 or higher, more preferably 300,000 or higher, and particularly preferably 500,000 or higher. In the case where the weight average molecular weight is lower than 100, 000, the durability is poor and the cohesive strength of the pressure-sensitive adhesive layer is lowered so that an adhesive residue tends to be generated. On the other hand, in terms of workability, the weight average molecular weight is preferably 2, 000, 000 or lower and more preferably 1,500,000 or lower. The weight average molecular weight is measured in terms of polystyrene by GPC (gel permeation chromatography).

Because of easiness of keeping good balance of the adherability, the glass transition temperature (Tg) of the (meth)acryl-based polymer is preferably 0°C or lower (usually -100°C or higher), more preferably -10°C or lower, and particularly preferably -30°C or lower. In the case where the glass transition temperature is higher than 0°C, the polymer becomes difficult to be fluidized and insufficient in wettability to an adherend and tends to cause blisters generated between an adherend and the pressure-sensitive adhesive layer of the protecting sheet for glasses. The protecting sheet for glasses of the present invention may be used outdoors and particularly used in low temperature environments, and in terms of the tackiness at low temperatures, the glass transition temperature (Tg) is preferably lower. The glass transition temperature (Tg) of the (meth)acryl-based polymer can be adjusted within the above-mentioned range by properly changing the monomer components or the composition ratio to be used. For the glass transition temperature (Tg) (°C), a general value may be used and, for example, numeral values described in "Polymer Handbook Fourth Edition" (Ed. J. Brandup et al, 1999 John Wiley & Sons, Inc), Chapter VI, pp. 198-253 can be used. In the case of a new polymer, the peak temperature of loss tangent (tan $\delta$) by a viscoelasticity measurement method (shear method, measurement frequency: 1 Hz) may be employed as the glass transition temperature (Tg).

A method for producing the (meth)acryl-based polymer as described above may be properly selected from known radical polymerization methods such as solution polymerization, bulk polymerization, and emulsion polymerization, and particularly solution polymerization is preferable since temperature adjustment and addition of raw materials are easy for obtaining a constant molecular weight, and the like. The (meth) acryl-based polymer to be obtained may be any of a random copolymer, a block copolymer, a graft copolymer, and the like.

In the solution polymerization, examples to be used as a polymerization solvent include methyl ethyl ketone, acetone, ethyl acetate, tetrahydrofuran, dioxane, cyclohexanone, n-hexane, toluene, xylene, mesitylene, methanol, ethanol, n-propanol, isopropanol, water, various kinds of aqueous solutions, and the like. The reaction is carried out usually at about 60 to 80°C for around 4 to 10 hours in a flow of inert gas such as nitrogen.

A polymerization initiator, a chain-transfer agent, and the like to be used for the radical polymerization may be properly selected and used without any particular limitation.

Examples of the polymerization initiator to be used in the present invention may include, but are not limited to, azo-based initiators such as 2,2'-azobisisobutyronitrile, 2,2'-azobis(2-amidinopropane) dihydrochloride, 2,2'-azobis[2-(5-methyl-2-imidazolin-2-yl)propane] dihydrochloride, 2,2'-azobis(2-methylpropionamidine) disulfate, 2,2'-azobis(N,N'-dimethyleneisobutylamidine), and 2,2'-azobis[N-(2-carboxyethyl)-2-methylpropionamidine] hydrate (VA-057, manufactured by Wako Pure Chemical Industries, Ltd.); persulfuric acid salts such as potassium persulfate and ammonium persulfate; peroxide-based initiators such as di(2-ethylhexyl) peroxydicarbonate, di(4-t-butylcyclohexyl) peroxydicarbonate, di-sec-butyl peroxydicarbonate, t-butyl peroxyneodecanoate, t-hexyl peroxypivalate, t-butyl peroxypivalate, dilauroyl peroxide, di-n-octanoyl peroxide, 1,1,3,3-tetramethylbutylperoxy-2-ethylhexanoate, di(4-methylbenzoyl) peroxide, dibenzoyl peroxide, t-butyl peroxyisobutyrate, 1,1-di(t-hexylperoxy)cyclohexane, t-butyl hydroperoxide, and hydrogen peroxide; redox-based initiators obtained by combinations of peroxides and reducing agents such as a combination of a persulfate and sodium hydrogen sulfite and a combination of a peroxide and sodium ascorbate; and the like.

The above-mentioned polymerization initiators may be used alone or in combination of two or more thereof, and the content thereof in total is preferably about 0.005 to 1 part by weight and more preferably about 0.02 to 0.6 parts by weight per 100 parts by weight of the entire monomers.

In the present invention, a chain-transfer agent may be used in the polymerization. Use of a chain-transfer agent makes it possible to properly adjust the molecular weight of the acryl-based polymer.

Examples of the chain-transfer agent include laurylmercaptan, glycidylmercaptan, mercaptoacetic acid, 2-mercaptoethanol, thioglycolic acid, 2-ethylhexyl thioglycolate, 2,3-dimercapto-1-propanol, and the like.

These chain transfer agents may be used alone or in combination of two or more thereof, and the content thereof in total is about 0.01 to 0.1 parts by weight per 100 parts by weight of the entire monomers.

The (meth)acryl-based polymer of the present invention has the above-mentioned configuration. The pressure-sensitive adhesive layer in the present invention contains the (meth)acryl-based polymer as a base polymer.

On the other hand, the pressure-sensitive adhesive layer to be used for the protecting sheet for glasses of the present invention is formed of a pressure-sensitive adhesive composition containing the (meth)acryl-based polymer as a base polymer, and the pressure-sensitive adhesive layer can be formed by crosslinking the pressure-sensitive adhesive composition. In this case, crosslinking of the pressure-sensitive adhesive composition is generally carried out after application of the pressure-sensitive adhesive composition, but it is also possible to transfer a pressure-sensitive adhesive layer formed of a pressure-sensitive adhesive composition to a support after crosslinking.

As a crosslinking agent, a compound having at least two functional groups which can be reacted (form a bond) with the functional groups of the monomers to be used, and examples thereof to be used include a polyisocyanate compound, an epoxy compound, an oxazoline compound, a melamine-based resin, an aziridine derivative, a metal chelate compound, and the like. These compounds may be used alone or in combination.

Examples of the polyisocyanate compound include aromatic isocyanates such as tolylene diisocyanate and xylene diisocyanate; alicyclic isocyanates such as isophorone diisocyanate; aliphatic isocyanates such as hexamethylene diisocyanate; emulsified type diisocyanates; and the like.

More specifically, examples of the polyisocyanate compound include lower aliphatic polyisocyanates such as butylene diisocyanate and hexamethylene diisocyanate; alicyclic isocyanates such as cyclopentylene diisocyanate, cyclohexylene diisocyanate and isophorone diisocyanate; aromatic diisocyanates such as 2,4-tolylene diisocyanate, 4,4'-diphenylmethane diisocyanate, and xylylene diisocyanate; isocyanate adducts such as trimethylolpropane/tolylene diisocyanate trimer adduct (trade name: Coronate L, manufactured by Nippon Polyurethane Industry Co., Ltd.), trimethylolpropane/hexamethylene diisocyanate trimer adduct (trade name: Coronate HL, manufactured by Nippon Polyurethane Industry Co., Ltd.), and isocyanurate isomer of hexamethylene diisocyanate (trade name: Coronate HX, manufactured by Nippon Polyurethane Industry Co., Ltd.); self-emulsification type polyisocyanate (trade name: Aquanate 200, manufactured by Nippon Polyurethane Industry Co., Ltd.); and the like. These polyisocyanate compounds may be used alone or in combination of two or more thereof.

Examples of the oxazoline compound include 2-oxazoline, 3-oxazoline, 4-oxazoline, 5-keto-3-oxazoline, Epocros (manufactured by NIPPON SHOKUBAI CO., LTD.), and the like. These compounds may be used alone or in combination.

Examples of the epoxy compound include polyglycidylamine compounds such as N,N,N',N'-tetraglycidyl-m-xylenediamine (trade name: TETRAD-X, manufactured by MITSUBISHI GAS CHEMICAL COMPANY, INC.), 1,3-bis(N,N-diglycidylaminomethyl)cyclohexane (trade name: TETRAD-C, manufactured by MITSUBISHI GAS CHEMICAL COMPANY, INC.), tetraglycidyldiaminodiphenylmethane, triglycidyl-p-aminophenol, diglycidylaniline, and diglycidyl-o-toluidine; and the like. These compounds may be used alone or in combination.

Examples of the melamine-based resin include hexamethylol melamine, a water-soluble melamine-based resin, and the like.

Examples of the aziridine derivative include, as commercialized products, trade name: HDU (manufactured by Sogo Pharmaceutical Co., Ltd.), trade name: TAZM (manufactured by Sogo Pharmaceutical Co., Ltd.), trade name: TAZO (manufactured by Sogo Pharmaceutical Co., Ltd.), and the like. These compounds may be used alone or in combination.

Examples of the metal chelate compound include those containing, as a metal component, aluminum, iron, tin, titanium, nickel, etc., and, as a chelate component, acetylene, methyl acetoacetate, ethyl lactate, etc. These compounds may be used alone or in combination.

The use amount (content) of the crosslinking agent may be properly selected in accordance with the balance with the (meth)acryl-based polymer to be crosslinked, and further in accordance with the use as the protecting sheet for glasses. In order to obtain sufficient weather resistance and heat resistance by the cohesive strength of the (meth)acryl-based polymer, it is generally preferable to contain 1 to 10 parts by weight, and more preferably 2 to 8 parts by weight, of the crosslinking agent per 100 parts by weight of the (meth) acryl-based polymer. If the content is lower than 1 part by weight, the crosslink formation by the crosslinking agent is insufficient and the solvent-insoluble matter ratio tends to be lowered, and also the cohesive strength of the pressure-sensitive adhesive layer becomes low and it results in a tendency of causing the adhesive residue. On the other hand, if the content exceeds 10 parts by weight, the initial adhering strength of the pressure-sensitive adhesive layer is insufficient, the cohesive strength of the polymer becomes high, the fluidity is lowered, and the wettability to an adherend becomes insufficient, and it results in a tendency of causing peeling off.

The pressure-sensitive adhesive layer to be used for the protecting sheet for glasses of the present invention is made more excellent in weather resistance and re-peeling properties by further adding 0.1 to 5.0 parts by weight of a weather-resistant stabilizer per 100 parts by weight of the (meth)acryl-based polymer. The weather-resistant stabilizer is used in an amount of preferably 0.1 to 3.0 parts by weight and more preferably 0.1 to 2.0 parts by weight.

The weather-resistant stabilizer in the present invention refers to an ultraviolet absorbent, a photostabilizer, or an antioxidant, and these compounds may be used alone or in combination of two or more thereof as the weather-resistant stabilizer.

Known ultraviolet absorbents such as a benzotriazole-based ultraviolet absorbent, a triazine-based ultraviolet absorbent, and a benzophenone-based ultraviolet absorbent may be properly used as the ultraviolet absorbent. These ultraviolet absorbents may be used alone or in combination of two or more thereof.

Known photostabilizers such as a hindered amine-based photostabilizer and a benzoate-based photostabilizer may be properly used as the photostabilizer. These photostabilizers may be used alone or in combination of two or more thereof.

Known antioxidants such as a hindered phenolic antioxidant, a phosphorus-based processing thermal stabilizer, a lactone-based processing thermal stabilizer, and a sulfur-based heat resistant stabilizer may be properly used as the antioxidant. These antioxidants may be used alone or in combination of two or more thereof.

The content of the weather-resistant stabilizer to be added is preferably 0.1 to 5.0 parts by weight, more preferably 0.1 to 3.0 parts by weight, and particularly preferably 0.1 to 2.0 parts by weight per 100 parts by weight of the (meth) acryl-based polymer to be used for the pressure-sensitive adhesive layer. Addition of the weather-resistant stabilizer within the above-mentioned range makes it possible to provide a pressure-sensitive adhesive layer excellent in weather resistance and re-peeling properties.

The pressure-sensitive adhesive layer to be used for the protecting sheet for glasses of the present invention may further contain other known additives and, for examples, a coloring agent, a powder of a pigment, a dye, a surfactant, a plasticizer, an adherability providing agent, a surface lubricating agent, a leveling agent, a surfactant, a softening agent, an antistatic agent, an inorganic or organic filler, a metal powder, granular and foil-like materials, and the like may be added properly in accordance with the use purpose. The blend amounts of these arbitrary components may be common use amounts in the field of surface protective materials.

Using the protecting sheet for glasses of the present invention as a support, a method for forming the pressure-sensitive adhesive layer on the sheet is not particularly limited, but examples of the method include a method for applying the pressure-sensitive adhesive composition onto a separator subjected to peeling treatment and then forming a pressure-sensitive adhesive layer on the support by drying and removing the polymerization solvent or the like; a method for applying the pressure-sensitive adhesive composition onto the support and then forming a pressure-sensitive adhesive layer on the support by drying and removing the polymerization solvent or the like. Thereafter, for the purpose of adjusting the component transfer for the pressure-sensitive adhesive layer and adjusting the crosslinking reaction, curing (aging treatment) may be carried out. In the case of producing a protecting sheet for glasses (protecting sheet for glasses bearing a pressure-sensitive adhesive layer: pressure-sensitive adhesive sheet) by applying the pressure-sensitive adhesive composition onto the support, at least one kind of a medium (solvent) other than the polymerization solvent may be added newly to the composition so as to evenly apply the composition onto the support.

Known methods to be used in the production of a protecting sheet for glasses (protecting sheet for glasses bearing a pressure-sensitive adhesive layer: pressure-sensitive adhesive sheet) are employed as the method for forming the pressure-sensitive adhesive layer to be used in the present invention. Specifically, examples thereof include roll coating, kiss roll coating, gravure coating, reverse coating, roll brush, spray coating, dip roll coating, bar coating, knife coating, air knife coating, extrusion coating with a die coater, and the like.

The surface of the pressure-sensitive adhesive layer may be subjected to surface treatment such as corona treatment, plasma treatment, or ultraviolet treatment.

In the present invention, the addition amount of the crosslinking agent (particularly isocyanate-based crosslinking agent) is adjusted so that the gel ratio of the crosslinked pressure-sensitive adhesive layer is preferably 70 to 98 wt%, more preferably 80 to 97 wt%, and even more preferably 85 to 97 wt%. If the gel ratio is lower than 70 wt%, the cohesive strength is lowered and therefore, the durability and the tackiness to a curved surface may be possibly inferior, and if it exceeds 98 wt%, the tackiness may be possibly inferior.

In the gel ratio of the pressure-sensitive adhesive layer, a value obtained by immersing a dried weight $W_1$ (g) of a pressure-sensitive adhesive layer in ethyl acetate, thereafter taking an insoluble matter of the pressure-sensitive adhesive layer out of the ethyl acetate, measuring a weight $W_2$ (g) after drying, and carrying out calculation according to $(W_2/W_1) \times 100$ is defined as a gel ratio (wt%).

More specifically, for example, $W_1$ (g) (about 100 mg) of a pressure-sensitive adhesive layer after crosslinking is sampled in a tetrafluoroethylene resin film (Nitoflon NTF 1122, manufactured by NITTO DENKO CORPORATION; pore diameter: 0.2 $\mu$m). Next, the sample is immersed in ethyl acetate at about 23°C for 7 days and thereafter the sample is taken out, dried at 130°C for 2 hours and $W_2$(g) of the obtained pressure-sensitive adhesive layer is measured. The $W_1$ and $W_2$ are substituted in the above-mentioned equation to calculate the gel ratio (wt%).

In order to adjust the gel ratio to a prescribed value, it is necessary not only to adjust the addition amount of the crosslinking agent (particularly, isocyanate-based crosslinking agent) but also to sufficiently consider the effect of crosslinking conditions (heating treatment temperature, heating time, etc.).

The crosslinking treatment may be carried out at the temperature in the drying step of the pressure-sensitive adhesive layer, or may be carried out by additionally providing a crosslinking treatment step after the drying step.

In the present invention, the pressure-sensitive adhesive layer is formed such that the thickness after the drying is about 5 to 50 $\mu$m and preferably about 10 to 30 $\mu$m.

In the case where the pressure-sensitive adhesive layer is exposed to such a surface, the pressure-sensitive adhesive layer may be protected with a separator subjected to peeling treatment (including peeling sheet, peeling liner, etc.) until it is practically used.

Examples of a constituent material for the separator (peeling sheet, peeling liner) may include proper thin sheets of plastic films such as polyethylene, polypropylene, polyethylene terephthalate, and polyester films; porous materials such as paper, a cloth, and a nonwoven fabric; nets, foamed sheets, metal foils, and laminated bodies of these materials; and the like, and in terms of excellent surface smoothness, plastic films are preferably used.

The film is not particularly limited as long as it is a film capable of protecting the pressure-sensitive adhesive layer, and examples thereof include a polyethylene film, a polypropylene film, a polybutene film, a polybutadiene film, a polymethylpentene film, a polyvinyl chloride film, a vinyl chloride-copolymer film, a polyethylene terephthalate film, a polybutylene terephthalate film, a polyurethane film, an ethylene-vinyl acetate copolymer film, and the like.

The thickness of the separator is usually 5 to 200 $\mu$m and preferably about 5 to 100 $\mu$m.

If necessary, the separator may be subjected to release and stain-resistant treatment by a silicone-based, a fluorine-based, a long chain alkyl-based, or a fatty acid amide-based release agent, a silica powder and the like, and to antistatic treatment by application type, kneading type, or vapor deposition type treatment. Particularly, the peeling properties from the pressure-sensitive adhesive layer can be more improved by properly carrying out peeling treatment such as silicone treatment, long chain alkyl treatment, or fluorine treatment for the surface of the separator.

In the production method, the sheet (peeling sheet, separator, peeling liner) subjected to peeling treatment may be used as a separator as it is for the protecting sheet for glasses, and the simplification in the steps can be achieved.

In the present invention, a protecting sheet for glasses means a film for protecting a glass surface of an automobile or the like indoors and outdoors, examples thereof include films used for protecting a glass surface of a compact car, a passenger car, a large-sized car, a special vehicle, a heavy machine, a motorcycle, and the like.

The present invention provides a protecting sheet for glasses (protecting sheet for glasses bearing a pressure-sensitive adhesive layer) for surface protection of glasses, the sheet being excellent in workability, adhesion reliance, visibility, and impact resistance by making the above-mentioned configuration.

EXAMPLES

Examples which specifically show a construction and effect of the present invention will be explained below. Assessment items in Examples were measured by the following procedures.

<Measurement of molecular weight>

The weight average molecular weight was measured by using a GPC apparatus (HLC-8120 GPC, manufactured by TOSOH CORPORATION). The measurement conditions are as follows.

- Eluent: THF
- Flow rate: 0.5 ml/minute
- Measurement temperature: 40°C
- Column: TSKgel GMH-H (S) (2 columns)
- Detector: Refractive index detector (RI)

The weight average molecular weight was measured in terms of polystyrene.

<Measurement for glass transition temperature (Tg)>

The glass transition temperature (Tg) (°C) was measured according to the following equation by using the following literature data as the glass transition temperature Tgn (°C) of a homopolymer of each monomer.

$$\text{Equation: } 1/(Tg + 273) = \Sigma[Wn/(Tgn + 273)]$$

[wherein, Tg (°C) represents glass transition temperature of copolymer; Wn(-)represents weight ratio of each monomer; Tgn (°C) represents glass transition temperature of homopolymer of each monomer; and n represents kinds of each monomer). Literature data:

- 2-Ethylhexyl acrylate: -70°C
- Hydroxyethyl acrylate: -15°C
- Ethyl acrylate: -22°C
- Methyl methacrylate: 105°C

<Measurement for melting point (Tm)>

The melting point (Tm) (°C) of a polymer of each resin layer used as a protecting sheet for glasses (support) was calculated by using a differential calorimeter (DSC 6220, manufactured by SII-Nanotechnology) and measuring the value of Tm (temperature rising rate: 10°C/minute) in 2nd run. The 2nd run refers to a method for removing the heat hysteresis attributed to formation of a material by rising the temperature once to the melting point or higher, then cooling the sample, and reading the endothermic peak while again rising the temperature from room temperature.

<Impact resistance>

The impact resistance was evaluated by bonding a produced protecting sheet for glasses (support) to a glass (tempered glass, manufactured by Fujiwara Kogyo Co., Ltd.; thickness: 5 mm) in a specimen size with a double-sided pressure-sensitive adhesive tape (LA-25, manufactured by NITTO DENKO CORPORATION, 25 μm) to thereby obtain a sample, carrying out a test for the obtained sample by a chipping tester (JA-400, manufactured by Suga Test Instruments Co., Ltd.) under the following test conditions, calculating the scratched area ratio (%) per specified area of each adherend after the test according to the following equation, and carrying out numeric conversion.

$$\text{Scratched area ratio (\%) = [(total area of scratched part)/(total area)]} \times 100$$

The test conditions were as follows.

- Air pressure: 0.4 MPa (4 kgf/cm$^2$)
- Blowing distance: 350 mm
- Chipping amount: About 400 g/10 seconds

- Chipping size: Diameter of 3 to 5 mm
- Sample size: Width 90 mm × height 145 mm
- Test environments: 23°C × 50%RH

<Tensile modulus>

A tensile test was carried out for a protecting sheet for glasses in accordance with JIS-K-7127 using a universal tensile tester (Autograph AG-IS, manufactured by SHIMADZU CORPORATION), and the maximum inclination was measured twice and the average value thereof was used for evaluation.

- Sample size: Width 25 mm × length 50 mm
- Test environments: 23°C × 50%RH

<Bending strength>

The bending strength was evaluated by carrying out calculation according to the following equation from the thickness of the sample used for tensile modulus evaluation and the value of the tensile modulus:

$$\text{Bending strength } (\mu m^3 \cdot MPa) = (\text{length of sample})^3 \times (\text{tensile modulus}).$$

<Image clarity>

The image clarity was evaluated by measuring light transmitted through a sample by using a touch panel type image clarity measurement apparatus (ICM-IT, manufactured by Suga Test Instruments Co., Ltd.) and using the light transmittance (%) as the image clarity. A protecting sheet for glasses cut into a square of length 70 mm × width 70 mm was used as the sample. The measurement was carried out such that the measurement result in MD direction was used in the case where the direction of an optical comb and the MD direction of the sample were same, and the measurement was repeated twice respectively in the MD direction and in the TD direction, and the average value thereof was defined as a measurement result. When the measurement results in the MD direction and in the TD direction were compared, a significant difference was found in the measurement results in the MD direction and therefore, the measurement results in the MD direction were used for indicating the correlation with the surface roughness. Regarding the light incident surface from a light source, the measurement was carried out for both surfaces (front and rear surfaces) of the sample. Since there was no difference of image clarity depending on the difference of the light incident surface, the average value of the measurement results in the respective surfaces was used as a measurement result for each sample. Herein, the fact that the light entering into the optical comb is large (high) means that light is straightly transmitted, and it means that the sample surface is free from strain (surface roughness, etc.) and thus, it is judged that the visibility is good.

<Constant load test>

A protecting sheet for glasses (support, longitudinal direction: MD direction) in a size of width 20 mm × length 110 mm was pressure-bonded to an unattached surface of tin (Sn) of Micro Slide Glass (MICRO SLIDE GLASS, manufactured by Matsunami Glass Ind., Ltd.; size 65 mm × 165 mm; thickness 1.2 to 1.5 mm) (since a glass plate is prepared by pouring melted glass on tin, tin is attached to one surface) by a method of reciprocating a 2 kg roller, and the resultant was allowed to stand under environments of 23°C × 50% RH for 30 minutes to obtain a sample for evaluation. The rim of each sample for evaluation was peeled off by 10 mm and 30 g of a weight was fixed thereto by a clip, and the time taken to completely peel off and drop the sample for evaluation was measured and the peeling rate (mm/minute) was calculated.

<Test for peeling property by blowing>

The peeling property by blowing was evaluated by bonding a produced protecting sheet for glasses (support) to a glass (tempered glass, manufactured by Fujiwara Kogyo Co., Ltd.; thickness: 5 mm) in a sample size to thereby obtain a sample, subjecting the sample to a test in the following test conditions using a chipping tester (JA-400, manufactured by Suga Test Instruments Co., Ltd.), measuring the peeling distance at 5 points after the test, and employing the average value thereof for evaluation.

The testing conditions were as follows.

- Air pressure: 0.5 MPa(5 kgf/cm$^2$)
- Blowing distance: 200 mm
- Blowing time: 20 seconds
- Sample size: length 50 mm × width 50 mm (adhering surface was set to length 40 mm × width 50 mm and a masking tape was bonded to the remaining of length 10 mm × width 50 mm to form a peeling portion from the beginning)
- Test environments: 23°C × 50%RH

<Preparation of pressure-sensitive adhesive A solution>

A reaction container equipped with a stirring blade, a thermometer, a nitrogen gas introduction tube, and a condenser was charged with 100 parts by weight of 2-ethylhexyl acrylate, 4 parts by weight of hydroxyethyl acrylate, 0.2 parts by weight of 2,2'-azobisisobutyronitrile as a polymerization initiator (manufactured by KISHIDA CHEMICAL CO., LTD.), and ethyl acetate, and nitrogen gas was introduced under mildly stirring conditions and nitrogen gas purge was carried out, and thereafter, polymerization reaction (solution polymerization) was performed for 10 hours while the liquid temperature in the flask was kept at about 60°C to prepare an acryl-based polymer A solution (solid matter 50 wt%). This acryl-based polymer A had a weight average molecular weight of 550,000 and a Tg of -60°C.

A pressure-sensitive adhesive A solution was prepared by adding 4 parts by weight of an aromatic isocyanate (Coronate L, manufactured by Nippon Polyurethane Industry Co., Ltd.) as a crosslinking agent per 100 parts by weight of the solid matter of the acryl-based polymer A solution and evenly mixing and stirring the mixture.

<Preparation of pressure-sensitive adhesive B solution>

A reaction container equipped with a stirring blade, a thermometer, a nitrogen gas introduction tube, and a condenser was charged with 90 parts by weight of 2-ethylhexyl acrylate, 10 parts by weight of acrylic acid, 0.6 parts by weight of 2,2'-azobisisobutyronitrile as a polymerization initiator (manufactured by KISHIDA CHEMICAL CO., LTD.), and ethyl acetate, and nitrogen gas was introduced under mildly stirring conditions and nitrogen gas purge was carried out, and thereafter, polymerization reaction (solution polymerization) was performed for 10 hours while the liquid temperature in the flask was kept at about 60°C to prepare an acryl-based polymer B solution (solid matter 45 wt%). This acryl-based polymer B had a weight average molecular weight of 1,200,000 and a Tg of -61°C.

A pressure-sensitive adhesive B solution was prepared by adding 5 parts by weight of an epoxy compound (TETRAD-C, manufactured by Mitsubishi Chemical Corporation) as a crosslinking agent per 100 parts by weight of the solid matter of the acryl-based polymer B solution and evenly mixing and stirring the mixture.

<Preparation of pressure-sensitive adhesive C solution>

A reaction container equipped with a stirring blade, a thermometer, a nitrogen gas introduction tube, and a condenser was charged with 90 parts by weight of 2-ethylhexyl acrylate, 10 parts by weight of acrylic acid, 0.6 parts by weight of 2,2'-azobisisobutyronitrile as a polymerization initiator (manufactured by KISHIDA CHEMICAL CO., LTD.), and ethyl acetate, and nitrogen gas was introduced under mildly stirring conditions and nitrogen gas purge was carried out, and thereafter, polymerization reaction (solution polymerization) was performed for 10 hours while the liquid temperature in the flask being kept at about 60°C to prepare an acryl-based polymer C solution (solid matter 45 wt%). This acryl-based polymer C had a weight average molecular weight of 1,200,000 and a Tg of -61°C.

A pressure-sensitive adhesive C solution was prepared by adding 7 parts by weight of an epoxy compound (TETRAD-C, manufactured by Mitsubishi Chemical Corporation) as a crosslinking agent per 100 parts by weight of the solid matter of the acryl-based polymer C solution and evenly mixing and stirring the mixture.

<Preparation of urethane polymer-acryl-based monomer mixture>

A reaction container equipped with a stirring blade, a thermometer, a nitrogen gas introduction tube, and a condenser was charged with 5 parts by weight of acrylic acid, 35.5 parts by weight of isobornyl acrylate (IBXA), 9.5 parts by weight of n-butyl acrylate, and 36.4 parts by weight of polyoxytetramethylene glycol as a polyol component (PTMG, manufactured by Mitsubishi Chemical Corporation, molecular weight: 650); under a stirring condition, 13.6 parts by weight of hydrogenated xylylene diisocyanate (HXDI) as an isocyanate component was dropwise added; reaction was performed at 65°C for 10 hours; 2 parts by weight of 4-hydroxybutyl acrylate was dropwise added; and reaction was further performed at 65°C for 1 hour to prepare a urethane polymer-acryl-based monomer mixture (solid matter 100 wt%). Thereafter, 3 parts by weight of trimethylolpropane triacrylate as a crosslinking agent and 0.15 parts by weight of bis(2,4,6-trimethylbenzoyl)phenyl phosphine oxide (IRGACURE 819, manufactured by Ciba Specialty Chemicals Inc.) as a photopolymerization initiator were added.

[Example 1]

A protecting sheet for glasses (support) with a total thickness of 70 $\mu$m was obtained by extrusion molding of a three-layer sheet in which outer surface layer/intermediate layer/inner surface layer was polypropylene layer/polyethylene layer/polypropylene layer with a T-die method so that the thickness ratio of the three-layer sheet was 1/2/1. As the polypropylene layers, random polypropylene (WINTEK WFK4TA, manufactured by Japan Polypropylene Corporation, Tm: 125°C, 100 parts by weight) was used, and as the polyethylene layer, L-LDPE (linear low density polyethylene) (Evolue SP-0540, manufactured by Prime Polymer Co., Ltd., Tm: 98°C, 60 parts by weight) and (Evolue SP-1540, manufactured by Prime Polymer Co., Ltd., Tm: 113°C, 40 parts by weight) were used. The inner surface side of the inner surface layer was corona-treated and the treated surface was coated with the pressure-sensitive adhesive A solution and heated at 80°C for 3 minutes so that the thickness of a pressure-sensitive adhesive layer after drying became 10 $\mu$m to obtain a protecting sheet for glasses bearing a pressure-sensitive adhesive layer.

[Example 2]

A protecting sheet for glasses bearing a pressure-sensitive adhesive layer was obtained in the same manner as in Example 1, except that the three-layer sheet in which outer surface layer/intermediate layer/inner surface layer was polypropylene layer/polyethylene layer/polypropylene layer was extrusion-molded with a T-die method so that the thickness ratio of the three-layer sheet was 1/2/1 (25 $\mu$m/50 $\mu$m/25 $\mu$m) and the resultant sheet was prepared so that the total thickness was 100 $\mu$m.

[Example 3]

A protecting sheet for glasses bearing a pressure-sensitive adhesive layer was obtained in the same manner as in Example 1, except that a 50 $\mu$m-thick polyethylene terephthalate (PET) film (Lumirror S-10, manufactured by Toray Industries, Inc.) was used in place of the three-layer film in which outer surface layer/intermediate layer/inner surface layer was polypropylene layer/polyethylene layer/polypropylene layer.

[Example 4]

A protecting sheet for glasses bearing a pressure-sensitive adhesive layer was obtained in the same manner as in Example 1, except that a 100 $\mu$m-thick polyethylene terephthalate (PET) film (Diafoil, manufactured by Mitsubishi Polyester Film Inc.) was used in place of the three-layer film in which outer surface layer/intermediate layer/inner surface layer was polypropylene layer/polyethylene layer/polypropylene layer.

[Example 5]

A protecting sheet for glasses bearing a pressure-sensitive adhesive layer was obtained in the same manner as in Example 1, except that a single layer of a 100 $\mu$m-thick polypropylene layer (Random polypropylene, (WINTEK WFK4TA, manufactured by Japan Polypropylene Corporation, Tm: 125°C)) was extrusion-molded with a T-die method in place of the three-layer film in which outer surface layer/intermediate layer/inner surface layer was polypropylene layer/polyethylene layer/polypropylene layer; the inner surface side of the polypropylene layers was corona-treated; and the pressure-sensitive adhesive B solution was used in place of the pressure-sensitive adhesive A solution.

[Example 6]

A protecting sheet for glasses bearing a pressure-sensitive adhesive layer was obtained in the same manner as in Example 1, except that a single layer of a 100 $\mu$m-thick polypropylene layer (Random polypropylene, (WINTEK WFK4TA, manufactured by Japan Polypropylene Corporation, Tm: 125°C)) was extrusion-molded with a T-die method in place of the three-layer film in which outer surface layer/intermediate layer/inner surface layer was polypropylene layer/polyethylene layer/polypropylene layer; the inner surface side of the polypropylene layers was corona-treated; and the pressure-sensitive adhesive C solution was used in place of the pressure-sensitive adhesive A solution.

[Comparative Example 1]

A protecting sheet for glasses bearing a pressure-sensitive adhesive layer was obtained in the same manner as in Example 1, except that the three-layer sheet in which outer surface layer/intermediate layer/inner surface layer was polypropylene layer/polyethylene layer/polypropylene layer was extrusion-molded with a T-die method so that the thickness ratio of the three-layer sheet was 1/2/1 (10 μm/20 μm/10 μm) and the resultant sheet was prepared so that the total thickness was 40 μm.

[Comparative Example 2]

The above-mentioned urethane polymer-acryl-based monomer mixture solution was applied onto a 75 μm-thick polyethylene terephthalate (PET) subjected to peeling treatment in a manner of adjusting the thickness after curing to 50 μm. After a 100 μm-thick PET film subjected to peeling treatment as a separator was put thereon, UV rays (using a metal halide lamp, irradiance; 290 mW/cm$^2$, luminous energy: 4,600 mJ/cm$^2$) were radiated to the coated surface to cure the mixture solution, and further drying treatment of 140°C × 3 minutes was carried out to polymerize unreacted monomers and thus to obtain a urethane-acryl composite film, which was a protecting sheet for glasses.

[Comparative Example 3]

A urethane-acryl composite film, which was a protecting sheet for glasses, was obtained in the same manner as in Comparative Example 2, except that the thickness after curing was adjusted to 100 μm.

[Comparative Example 4]

A PVC film, which was a 70 μm-thick protecting sheet for glasses, was obtained by kneading 30 parts by weight of 2-ethylhexyl phthalate (DOP) with 100 parts by weight of a polyvinyl chloride (PVC) compound (degree of polymerization; 1050) by a calender method (160°C).

[Comparative Example 5]

A PVC film, which was a protecting sheet for glasses, was obtained in the same manner as in Comparative Example 4, except that the thickness was adjusted to 200 μm.
[Table 1]

| Evaluation result | | Example | | | | | | Comparative Example | | | | |
|---|---|---|---|---|---|---|---|---|---|---|---|---|
| Content | Unit | 1 | 2 | 3 | 4 | 5 | 6 | 1 | 2 | 3 | 4 | 5 |
| Thickness (support) | μm | 70 | 100 | 50 | 100 | 100 | 100 | 40 | 40 | 100 | 70 | 200 |
| Average surface roughness (Ra) | μm | 0.18 | 0.15 | 0.13 | 0.13 | 0.18 | 0.18 | 0.16 | 1.20 | 1.40 | 0.41 | 0.41 |
| Scratched area ratio | % | 0.10 | 0.10 | 0.06 | 0.05 | 0.10 | 0.10 | 0.17 | 0.16 | 0.04 | 0.05 | 0.03 |
| Tensile modulus | MPa | 256 | 256 | 3386 | 3340 | 861 | 861 | 256 | 19 | 19 | 74 | 74 |
| Bending strength | $\times 10^7$ μm$^3$·Mpa | 8.8 | 26 | 42 | 330 | 86 | 86 | 1.6 | 0.1 | 1.9 | 2.5 | 59 |
| Image clarity | % | 73 | 70 | 78 | 95 | 82 | 81 | 90 | 2 | 2 | 30 | 9 |

(continued)

| Evaluation result | | Example | | | | | | Comparative Example | | | | |
|---|---|---|---|---|---|---|---|---|---|---|---|---|
| Content | Unit | 1 | 2 | 3 | 4 | 5 | 6 | 1 | 2 | 3 | 4 | 5 |
| Peeling property by blowing | mm/20 seconds | 8.1 | 7.9 | 7.5 | 8.4 | 1.1 | 50.0 | 8.3 | - | - | - | - |
| Peeling rate | mm/ minute | 107 | 100 | 97 | 105 | 5 | 500 | 95 | - | - | - | - |

According to the results in Table 1, in the Examples, since the tensile modulus and the thickness were within the desired ranges, the scratched area ratio was also within the desired range and the impact resistance was excellent and further the image clarity and the peeling property by blowing were good, and thus it was confirmed that the visibility and the adhesion reliance were also excellent. Furthermore, since the bending strength was within the desired range, it was confirmed that the following properties, the adhesion reliance accompanied therewith and the workability were also excellent.

In contrast, in the Comparative Examples with configurations different from those of the present invention, for example, in Comparative Example 1, since the thickness was small and the scratched area ratio and the bending strength were out of the desired numeral ranges, it was confirmed that the impact resistance and the following properties were inferior; and in Comparative Example 2, since the tensile modulus and the thickness were small, the scratched area ratio and the bending strength were out of the desired numeral ranges so that the impact resistance and the following properties were inferior, and moreover, since the surface roughness was high, it was confirmed that the image clarity was inferior. In Comparative Example 3, since the tensile modulus was small, the bending  strength was out of the desired numeral range and the impact resistance was inferior and further, since the surface roughness was high, it was confirmed that the image clarity was also inferior. In Comparative Example 4 and Comparative Example 5, since the surface roughness was high, it was confirmed that the image clarity was inferior.

Accordingly, it was clear that the protecting sheet for glasses of the present invention was excellent in adhesion reliance, visibility, and impact resistance.

**Claims**

1.    A protecting sheet for glasses having a scratched area ratio of 0.15% or lower in an impact resistance test, a tensile modulus of 50 MPa to 3500 MPa in accordance with JIS K7124, a bending strength of $2.0 \times 10^7$ to $5.5 \times 10^{10}$ $\mu$m$^3$·MPa, an image clarity of 70% or higher, and a thickness of 45 to 250 $\mu$m.

2.    The protecting sheet for glasses according to claim 1, which has a peeling rate of 500 mm/minute or lower in a constant load peeling-off test.

3.    The protecting sheet for glasses according to claim 1 or 2, which has a pressure-sensitive adhesive layer on at least one surface.

<div align="center">

**INTERNATIONAL SEARCH REPORT**

</div>

| International application No. |
| --- |
| PCT/JP2012/051694 |

**A. CLASSIFICATION OF SUBJECT MATTER**
*C03C17/32*(2006.01)i, *B32B27/00*(2006.01)i, *C09J7/02*(2006.01)i, *C09J133/04*
(2006.01)i

According to International Patent Classification (IPC) or to both national classification and IPC

**B. FIELDS SEARCHED**

Minimum documentation searched (classification system followed by classification symbols)
C03C17/32, B32B1/00-43/00, C09J7/02, C09J133/04, C03B35/00

Documentation searched other than minimum documentation to the extent that such documents are included in the fields searched
| | | | |
| --- | --- | --- | --- |
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y | JP 2001-209039 A (Nitto Denko Corp.), 03 August 2001 (03.08.2001), claims; examples; table 1; paragraphs [0018], [0025] to [0026] & US 6407788 B1 & EP 1102108 A2 & DE 60027110 D & DE 60027110 T & AT 322701 T & DK 1102108 T & ES 2255940 T & HK 1038371 A & TW 237719 B & KR 10-2001-0051756 A & CN 1301781 A | 1-3 |

☒ Further documents are listed in the continuation of Box C.　　☐ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 18 April, 2012 (18.04.12) | 01 May, 2012 (01.05.12) |

| Name and mailing address of the ISA/ Japanese Patent Office | Authorized officer |
| --- | --- |
| Facsimile No. | Telephone No. |

Form PCT/ISA/210 (second sheet) (July 2009)

**INTERNATIONAL SEARCH REPORT**

International application No.

PCT/JP2012/051694

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2002-146130 A  (Idemitsu Petrochemical Co., Ltd.),<br>22 May 2002 (22.05.2002),<br>claims; paragraphs [0006], [0033] to [0037]; examples; paragraph [0044]; table 2; paragraph [0051]<br>& US 2004/0076804 A1    & EP 1340784 A1<br>& WO 2002/038654 A1 | 1-3 |
| Y | WO 2008/072368 A1  (Okamoto Glass Co., Ltd.),<br>19 June 2008 (19.06.2008),<br>examples<br>& US 2009/0168172 A1    & EP 2093595 A1<br>& CN 101427165 A          & HK 1132333 A | 1-3 |
| Y | JP 2005-200606 A  (Nitto Denko Corp.),<br>28 July 2005 (28.07.2005),<br>paragraphs [0001] to [0003]<br>(Family: none) | 1-3 |
| A | JP 2009-114407 A  (Sekisui Chemical Co., Ltd.),<br>28 May 2009 (28.05.2009),<br>claims; examples; table 1; paragraph [0048]<br>(Family: none) | 1-3 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001150608 A
- JP 2004106820 A
- JP 2003205588 A

**Non-patent literature cited in the description**

- Polymer Handbook. John Wiley & Sons, Inc, 1999, 198-253